# EUROPEAN PATENT SPECIFICATION

(11) **EP 4 059 870 B1**
(45) Date of publication and mention of the grant of the patent: **27.08.2025**
(21) Application number: 19952514.8
(22) Date of filing: 06.12.2019
(51) Int. Cl.: B65G 37/00, B65G 1/04, B65G 1/137

(54) **LOGISTICS SYSTEM AND LOGISTICS CONTROL METHOD**
LOGISTIKSYSTEM UND LOGISTIKSTEUERUNGSVERFAHREN
SYSTÈME LOGISTIQUE ET PROCÉDÉ DE COMMANDE LOGISTIQUE

(30) Priority: 15.11.2019 CN 201921977196 U; 15.11.2019 CN 201911120351
(43) Date of publication of application: 21.09.2022
(73) Proprietor: Shanghai Quicktron Intelligent Technology Co., Ltd, Shanghai 200435 (CN)
(72) Inventor: LI, Guohui, Shanghai 200435 (CN); GUO, Li, Shanghai 200435 (CN); FENG, Jun, Shanghai 200435 (CN)
(74) Representative: Viering, Jentschura & Partner mbB Patent- und Rechtsanwälte
(86) International application number: PCT/CN2019/123702
(87) International publication number: WO 2021/093058

(56) References cited:
- CN-A- 106 144 380
- CN-A- 108 146 948
- CN-A- 110 040 412
- CN-A- 110 040 412
- CN-A- 110 255 029
- CN-A- 110 356 754
- JP-A- 2016 055 966
- US-A1- 2018 178 979

## Description

### PRIORITY

This application claims priority to Chinese Patent Application No. 2019111203515 and Chinese Patent Application No. 20192197711964, filed on November 15, 2019.

### TECHNICAL FIELD

The present invention relates to the field of logistics, in particular to a logistics system and a logistics control method.

### BACKGROUND

In the existing logistics system, generally, a transporting robot can only transport one of the goods or one material box once, so the turnover speed of goods in the whole warehouse space is low. Even if the transporting robot can transport several of the goods for transit once, due to the limited picking or sorting ability of the docked sorting personnel, the transporting robot needs to wait in situ before completing the picking or sorting of all of the goods, and cannot perform other operations, which reduces the working efficiency of the transporting robot. Moreover, the above two problems also make the operation process of the whole logistics system unable to be connected smoothly, which reduces the working time and working cost of the whole logistics system.

CN 110 356 754 A discloses a goods picking system and method. The goods picking system includes: a shelf, including at least one layer of carrier, each layer of the carrier including at least one goods area for storing goods; and a picking vehicle, configured to not only run on the shelf, but also run outside of the shelf for loading, unloading and transporting goods. According to the present disclosure, the shelf adopts a three-dimensional shelf, so as to increase a space utilization rate; the picking vehicle is configured to not only run on the shelf, but also run outside of the shelf for loading, unloading and transporting the goods; the picking vehicle is configured to run, lift as well as load and unload goods so as to realize a goods-to-person picking mode; the number of the picking vehicle may be increased according to requirements, such that the problem that related shuttle vehicles have low flexibility is solved; moreover, equipment such as a conveying line, a lifting machine and the like between the three-dimensional shelf and a picking station in a related art is not required, so that cost is reduced.

The above information disclosed in the background art is only used to strengthen the understanding of the background of the present invention, so the above information may contain information that does not form the existing technology known to those skilled in the art.

### SUMMARY

In order to solve one or more technical problems in the background art, embodiments of the present invention provide a logistics system and a logistics control method.

In a first aspect, the present invention provides a logistics system, including:
a plurality of goods shelves, wherein the goods shelves are arranged at an interval, and a roadway is formed between two adjacent goods shelves;
a transporting apparatus, including a vehicle body and a bracket, wherein the bracket is arranged on an upper portion of the vehicle body, a plurality of bearing portions are arranged on a first side of the bracket, a liftable goods pickup portion is arranged on a second side of the bracket, and the transporting apparatus is configured for transporting goods from the goods shelves to an assembly line apparatus;
the assembly line apparatus, including a first annular conveying table, wherein the first annular conveying table has a plurality of first turnover channels; and
a plurality of workbenches, connected to the first turnover channels respectively, wherein sorting stations are arranged on the workbenches, and the sorting stations are configured for sorting the goods on corresponding first turnover channels.

In an implementation, the bearing portions are stacked successively along a height direction of the bracket, and an open end of an accommodation cavity of each of the bearing portions is arranged towards the second side.

In an implementation, the goods pickup portion includes a support plate, which is slidably connected to the accommodation cavity of each of the bearing portions.

In an implementation, the first annular conveying table further has a plurality of first feeding channels and a plurality of first discharging channels.

In an implementation, the assembly line apparatus further includes a second annular conveying table located above the first annular conveying table, the second annular conveying table has a plurality of second turnover channels, and the second turnover channels are connected to the workbenches respectively.

In an implementation, the second annular conveying table further has a plurality of second feeding channels and a plurality of second discharging channels.

In an implementation, the first annular conveying table has at least two first turnover channels with different diameters.

In the second aspect, the present invention provides a logistics control method, applied to the logistics system in the first aspect and including:
sending a first goods pickup instruction to a first transporting apparatus, wherein the first goods pickup instruction is used for controlling the first transporting apparatus to move to a goods shelf and pick up a plurality of goods, and to store the goods into respective bearing portions by a goods pickup portion of the first transporting apparatus;
sending a first transporting instruction to the first transporting apparatus according to a goods storage feedback result received from the first transporting apparatus, wherein the first transporting instruction is used for controlling the first transporting apparatus to move to the assembly line apparatus, and to place the goods onto the first annular conveying table by using the goods pickup portion, such that the first annular conveying table conveys each of the goods to a corresponding first turnover channel; and
sending a sorting instruction to a workbench according to a goods detection result received from a first turnover channel, wherein the sorting instruction is used for controlling a sorting station of the workbench to grab first goods to be sorted from the corresponding first turnover channel.

In an implementation, the logistics control method further includes:
sending a goods replenishment instruction to a workbench, wherein the goods replenishment instruction is used for controlling a sorting station to place second goods to be replenished to the goods shelf onto a second turnover channel, such that the second turnover channel conveys the second goods to a second annular conveying table;
sending a second goods pickup instruction to a second transporting apparatus, wherein the second goods pickup instruction is used for controlling the second transporting apparatus to move to the assembly line apparatus, and to store the second goods on the second annular conveying table onto a bearing portion of the second transporting apparatus by using a goods pickup portion of the second transporting apparatus; and
sending a second transporting instruction to the second transporting apparatus according to a goods storage feedback result received from the second transporting apparatus, wherein the second transporting instruction is used for controlling the second transporting apparatus to move to the goods shelf, and to store the second goods to the goods shelf by using the goods pickup portion.

In an implementation, the logistics control method further includes:
in a case where sorting of the first goods is completed, sending a turnover instruction to the workbench, wherein the turnover instruction is used for controlling the sorting station to place remaining goods on the first turnover channel onto a second turnover channel, such that the second turnover channel conveys the remaining goods to a second annular conveying table;
sending a third goods pickup instruction to a second transporting apparatus, wherein the third goods pickup instruction is used for controlling the second transporting apparatus to move to the assembly line apparatus, and to place the remaining goods on the second annular conveying table onto a bearing portion of the second transporting apparatus by using a goods pickup portion of the second transporting apparatus; and
sending a third transporting instruction to the second transporting apparatus according to a goods storage feedback result received from the second transporting apparatus, wherein the third transporting instruction is used for controlling the second transporting apparatus to move to the goods shelf, and to store the remaining goods to the goods shelf by using the goods pickup portion.

In a third aspect, the present invention provides a logistics control apparatus, applied to the logistics system of the first aspect, including:
a first sending module, configured for sending a first goods pickup instruction to a first transporting apparatus, wherein the first goods pickup instruction is used for controlling the first transporting apparatus to move to a goods shelf and pick up a plurality of goods, and to store the goods into respective bearing portions by a goods pickup portion of the first transporting apparatus;
a second sending module, configured for, according to a goods storage feedback result received from the first transporting apparatus, sending a first transporting instruction to the first transporting apparatus, wherein the first transporting instruction is used for controlling the first transporting apparatus to move to an assembly line apparatus, and to place the goods onto a first annular conveying table by using the goods pickup portion, such that the first annular conveying table conveys each of the goods to a corresponding first turnover channel; and
a third sending module, configured for sending a sorting instruction to a workbench according to a goods detection result received from a first turnover channel, wherein the sorting instruction is used for controlling a sorting station of the workbench to grab first goods to be sorted from the corresponding first turnover channel.

In an implementation, the logistics control apparatus further includes:
a fourth sending module, configured for sending a goods replenishment instruction to a workbench, wherein the goods replenishment instruction is used for controlling a sorting station to place second goods to be replenished to the goods shelf onto a second turnover channel, such that the second turnover channel conveys the second goods to a second annular conveying table;
a fifth sending module, configured for sending a second goods pickup instruction to a second transporting apparatus, wherein the second goods pickup instruction is used for controlling the second transporting apparatus to move to the assembly line apparatus, and to store the second goods on the second annular conveying table onto a bearing portion of the second transporting apparatus by using a goods pickup portion of the second transporting apparatus; and
a sixth sending module, configured for, according to a goods storage feedback result received from the second transporting apparatus, sending a second transporting instruction to the second transporting apparatus, wherein the second transporting instruction is used for controlling the second transporting apparatus to move to the goods shelf, and to store the second goods to the goods shelf by using the goods pickup portion.

In an implementation, the logistics control apparatus further includes:
a seventh sending module, configured for, in a case where sorting of the first goods is completed, sending a turnover instruction to the workbench, wherein the turnover instruction is used for controlling the sorting station to place remaining goods on the first turnover channel onto a second turnover channel, such that the second turnover channel conveys the remaining goods to a second annular conveying table;
an eighth sending module, configured for sending a third goods pickup instruction to a second transporting apparatus, wherein the third goods pickup instruction is used for controlling the second transporting apparatus to move to the assembly line apparatus, and to place the remaining goods on the second annular conveying table onto a bearing portion of the second transporting apparatus by using a goods pickup portion of the second transporting apparatus; and
a ninth sending module, configured for, according to a goods storage feedback result received from the second transporting apparatus, sending a third transporting instruction to the second transporting apparatus, wherein the third transporting instruction is used for controlling the second transporting apparatus to move to the goods shelf, and to store the remaining goods to the goods shelf by using the goods pickup portion.

In a fourth aspect, the present invention provides a logistics control terminal, applied to the logistics system of the first aspect. The function of the logistics control terminal can be implemented by hardware or by executing corresponding software by hardware. The hardware or software includes one or more modules corresponding to the above functions.

In one possible design, the structure of the logistics control terminal includes a processor and a memory, the memory is used to store a program supporting the logistics control terminal to execute the above-mentioned logistics control method, and the processor is configured for executing a program stored in the memory. The logistics control terminal may also include a communication interface for communicating with other devices or communication networks.

In a fifth aspect, the present invention provides a computer-readable storage medium for storing computer software instructions used by the logistics control terminal, including a program for executing the above-mentioned logistics control method.

One of the above technical solutions has the following advantages or beneficial effects: a plurality of bearing portions of the transporting apparatus of the embodiment of the present invention can transport more goods once, which improves the logistics efficiency of the logistics system. At the same time, because the assembly line apparatus is used as the transit medium between the transporting apparatus and the workbenches, the speed of conveying goods to the workbenches is improved, and the logistics efficiency of the logistics system is further improved.

The above summary is for the purpose of illustration only and is not intended to be limited in any way. Additionally to the illustrative aspects, implementations and features described above, further aspects, implementations and features of the present disclosure will be readily apparent by reference to the drawings and detailed descriptions below. The invention is set out in the appended set of claims.

### BRIEF DESCRIPTION OF THE DRAWINGS

FIG. 1 shows a structure diagram of a logistics system according to an embodiment of the present invention.
FIG. 2 shows a structure diagram of a transporting apparatus of a logistics system according to an embodiment of the present invention.
FIG. 3 shows a working state structure diagram of a transporting apparatus and a goods shelf of a logistics system according to an embodiment of the present invention.
FIG. 4 shows a structure diagram of a first annular conveying table of a logistics system according to an embodiment of the present invention.
FIG. 5 shows a structure diagram of a second annular conveying table of a logistics system according to an embodiment of the present invention.
FIG. 6 shows a flowchart of a logistics control method according to an embodiment of the present invention.
FIG. 7 shows a flowchart of another logistics control method according to an embodiment of the present invention.
FIG. 8 shows a flowchart of another logistics control method according to an embodiment of the present invention.
FIG. 9 shows a structure block diagram of a logistics control apparatus according to an embodiment of the present invention.
FIG. 10 shows a structure block diagram of a logistics control apparatus according to another embodiment of the present invention.
FIG. 11 shows a structure block diagram of a logistics control apparatus according to another embodiment of the present invention.
FIG. 12 shows a structure schematic diagram of a logistics control terminal according to an embodiment of the present invention.

### DETAILED DESCRIPTION

In the following, only certain exemplary embodiments are briefly described. As can be recognized by those skilled in the art, various modifications can be made to the described embodiments without departing from scope of the appended claims. Therefore, the drawings and the description are regarded as exemplary intrinsically rather than restrictive.

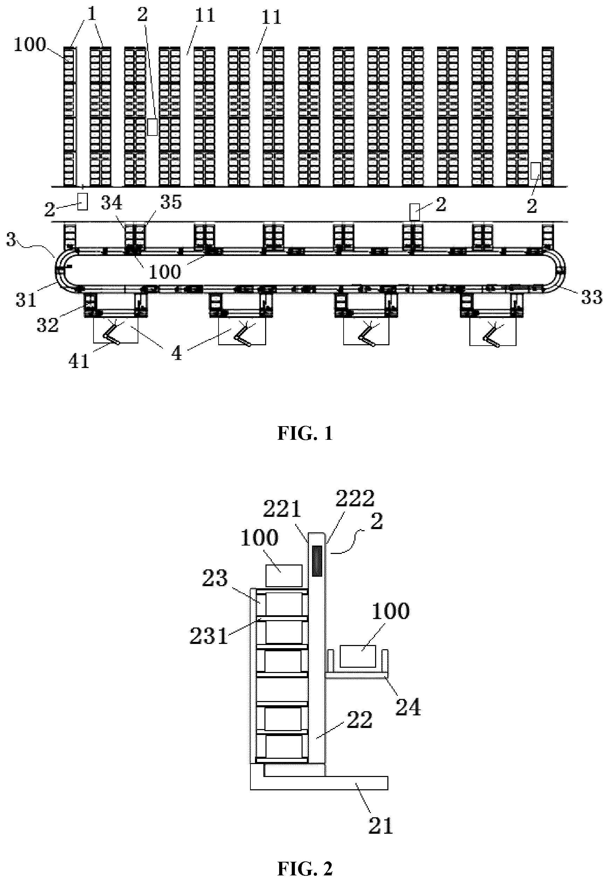

FIG. 1 shows a structure diagram of a logistics system of an embodiment of the present invention. As shown in FIG. 1, the logistics system includes a plurality of goods shelves 1, at least one transporting apparatus 2, an assembly line apparatus 3, and a plurality of workbenches 4.

A plurality of goods shelves 1 are arranged at an interval, and a roadway 11 is formed between two adjacent goods shelves 1. The roadway 11 is used for movement of the transporting apparatus 2. The shape of the goods shelf 1, the structure of the goods shelf 1, and the storage quantity of goods 100 of the goods shelf 1 can be selected and adjusted as needed.

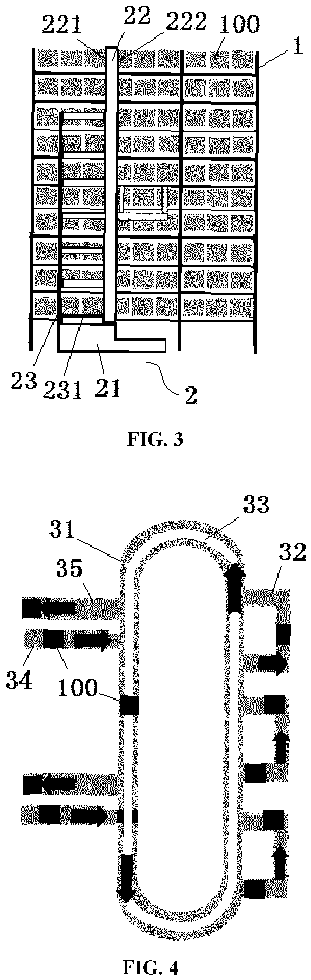

The transporting apparatus 2 includes a vehicle body 21 and a bracket 22 (as shown in FIG. 2). The bracket 22 is arranged on an upper portion of the vehicle body 21, and a plurality of bearing portions 23 are arranged on a first side 221 of the bracket 22. A liftable goods pickup portion 24 is arranged on a second side 222 of the bracket 22. The transporting apparatus 2 is configured for transporting the goods 100 from a goods shelf 1 to an assembly line apparatus 3 (as shown in FIG. 3).

It should be noted that the number of transporting apparatuses 2 can be selected and adjusted according to the goods shelves 1, the goods 100, or the transit capacity requirement of the logistics system, etc. The structure of the vehicle body 21 can be selected as needed, such as a mobile robot or an automated guided vehicle (AGV), etc., which is not specifically limited here.

The assembly line apparatus 3 includes at least one first annular conveying table 31 (as shown in FIG. 4); and the first annular conveying table 31 has a plurality of first turnover channels 32. In an example, the first turnover channels 32 communicates with a conveying belt 33 of the first annular conveying table 31, such that the goods 100 located on the conveying belt 33 are conveyed into the first turnover channels 32. The number of first annular conveying tables 31 can be selected and adjusted according to the transit capacity requirement of the logistics system.

A plurality of workbenches 4 are connected to the first turnover channels 32 respectively. Sorting stations 41 are arranged on the workbenches 4, and the sorting stations 41 are configured for sorting the goods 100 on corresponding first turnover channels 32. The number of workbenches 4 can be set according to the lengths of the first turnover channels 32. The arrangement positions of the workbenches 4 can be set according to the relative positions between the assembly line apparatus 3 and the goods shelves 1. For example, when the goods shelves 1 are arranged on one side along a length direction of the assembly line apparatus 3, the workbenches 4 may be arranged on the other side along the length direction of the assembly line apparatus 3. The process of sorting goods can be performed by mechanical grab arms on the sorting stations 41, or can be performed by manual laborers on the sorting stations 41; or the sorting operation of the goods 100 can be performed by the mechanical grab arms and the manual laborers on the sorting stations 41 together. The picking performed by the sorting stations 41 can be understood as picking, sorting, overall picking, or secondary sorting, etc., of the goods 100, which is not specifically limited here.

In an example, the goods 100 may include material packages, articles, material boxes carrying articles, etc.

In an implementation, as shown in FIG. 2, the bearing portions 23 are stacked successively along a height direction of the bracket 22, and an open end of an accommodation cavity of each of the bearing portions 23 is arranged towards the second side 222, such that the goods pickup portion 24 can take the goods 100 out of the accommodation cavities of the bearing portions 23 through the open end.

In an implementation, the goods pickup portion 24 includes a support plate 231, which is configured for carrying the goods 100. The support plate 231 is slidably connected to the accommodation cavity of each of the bearing portions.

In an example, a frame is uprightly arranged on the first side 221 of the bracket 22. A plurality of grid openings are arranged along the height direction in the frame, and each of the grid openings constitutes a bearing portion 23. The goods pickup portion 24 is connected to the bracket 22 through a lifting mechanism, so as to realize the lifting movement in the upright direction. A slide rail is arranged at the bottom of each of the grid openings, and the goods pickup portion 24 and the slide rail work together. After the goods pickup portion 24 moves to the position of a corresponding grid opening through the lifting mechanism, the goods pickup portion 24 slides into the slide rail through a slide mechanism and lifts the goods 100, and then the goods pickup portion 24 slides out of the slide rail through the slide mechanism, so as to take the goods 100 out of the grid opening.

In an implementation, as shown in FIGs. 1 and 4, the first annular conveying table 31 further has a plurality of first feeding channels 34 and a plurality of first discharging channels 35. The first feeding channels 34 are configured for conveying the goods 100 loaded on the transporting apparatus 2 onto the conveying belt 33 of the first annular conveying table 31. The first discharging channels 35 are configured for conveying the goods 100 on the conveying belt 33 of the first annular conveying table 31 to the transporting apparatus 2.

It should be noted that the first feeding channels 34 can also be used as the first discharging channels 35 and the first discharging channels 35 can also be used as the first feeding channels 34 according to different material conveying strategies.

In an example, in order to enable the transporting apparatus 2 to move between the assembly line apparatus 3 and the goods shelves 1 with the shortest travel distance, some of the first feeding channels 34 and some of the first discharging channels 35 can correspond to the roadways 11 respectively, such that the transporting apparatus 2 can transport the goods 100 on the goods shelves 1 onto the assembly line apparatus 3 faster, or transport the goods 100 on the assembly line apparatus 3 onto the goods shelves 1 faster.

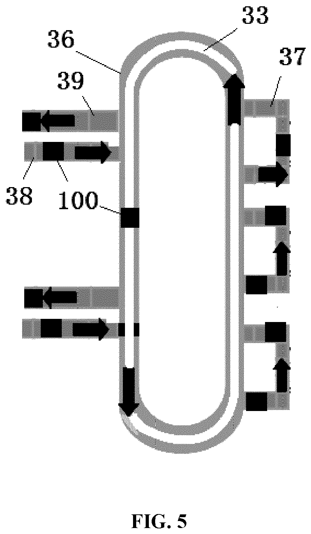

In an implementation, as shown in FIG. 5, the assembly line apparatus 3 further includes at least one second annular conveying table 36 located above the first annular conveying table 31. The second annular conveying table 36 has a plurality of second turnover channels 37. The second turnover channels 37 are connected to the workbenches 4 respectively. The sorting stations 41 of the workbenches 4 are configured for sorting the goods 100 on corresponding second turnover channels 37. The number of second annular conveying tables 36 can be selected and adjusted according to the transit capacity requirement of the logistics system.

In an example, the sorting stations 41 of the workbenches 4 can sort the goods 100 on the corresponding first turnover channels 32 and/or the corresponding second turnover channels 37, or put the goods 100 onto the corresponding first turnover channels 32 and/or the corresponding second turnover channels 37. That is, the goods 100 can be put on the conveying belt 33 of the first turnover channels 32 and/or the second turnover channels 37 by the transporting apparatus 2 or by the sorting stations 41.

In an implementation, as shown in FIG. 5, the second annular conveying table 36 also has a plurality of second feeding channels 38 and a plurality of second discharging channels 39. The second feeding channels 38 are configured for conveying the goods 100 loaded on the transporting apparatus 2 onto the conveying belt 33 of the second annular conveying table 36. The second discharging channels 39 are configured for conveying the goods 100 on the conveying belt 33 of the second annular conveying table 36 to the transporting apparatus 2.

It should be noted that the second feeding channels 38 can also be used as the second discharging channels 39 and the second discharging channels 39 can also be used as the second feeding channels 38 according to different material conveying strategies.

In an example, in order to enable the transporting apparatus 2 to move between the assembly line apparatus 3 and the goods shelves 1 with the shortest travel distance, some of the second feeding channels 38 and some of the second discharging channels 39 can correspond to the roadways 11 respectively, such that the transporting apparatus 2 can transport the goods 100 on the goods shelves 1 onto the assembly line apparatus 3 faster, or transport the goods 100 on the assembly line apparatus 3 to the goods shelves 1 faster.

In an example, the first annular conveying table 31 and the second annular conveying table 36 can be used in a cooperative manner to improve the working efficiency of the whole assembly line apparatus 3. For example, the goods 100 conveyed by the first annular conveying table 31 are used for sorting by the workbenches 4, and the goods 100 conveyed by the second annular conveying table 36 are used for replenishment of goods by the transporting apparatus 2 to the goods shelves 1.

In an implementation, the first annular conveying table 31 has at least two first turnover channels 32 with different diameters. The first turnover channels 32 with different diameters can be adapted to different sizes of goods 100, such that during the process of conveying the goods 100 of each size by the conveying belt 33, the goods 100 of each size, when reaching a first turnover channel 32 with a corresponding diameter, can automatically enter the first turnover channel 32, and reach a workbench 4 connected to the first turnover channel 32. Therefore, the work flow connection between the workbench 4 and the assembly line apparatus 3 is smoother.

In an implementation, the second annular conveying table 36 has at least two second turnover channels 37 with different diameters. The second turnover channels 37 with different diameters can be adapted to different sizes of goods 100, such that during the process of conveying the goods 100 of each size by the conveying belt 33, the goods 100 of each size, when reaching a second turnover channel 37 with a corresponding diameter, can automatically enter the second turnover channel 37, and reach a workbench 4 connected to the second turnover channel 37. Therefore, the work flow connection between the workbench 4 and the assembly line apparatus 3 is smoother.

In an example, a first detection apparatus is arranged on the first annular conveying table 31, and the first detection apparatus determines, by scanning identification codes on the goods 100, the first turnover channels 32 to which the goods 100 need to be conveyed. After determining the first turnover channels 32 to which the goods 100 need to be conveyed, the goods 100 can be transferred from the conveying belt 33 onto the first turnover channels 32 connected to the corresponding workbenches 4, through shift forks arranged on the first annular conveying table 31 or the sorting stations 41 of the corresponding workbenches 4. The first detection apparatus and the shift forks can also be arranged on the second annular conveying table 36, which will not be repeated here.

In an example, a second detection apparatus is arranged on the transporting apparatus 2, and the second detection apparatus determines target goods 100 by scanning the identification codes on the goods 100. The target goods 100 may be goods 100 located on a goods shelf 1, or goods 100 located on the first annular conveying table 31 or the second annular conveying table 36.

In an example, the logistics system may also include a control unit, and the control unit is electrically connected to the transporting apparatus 2 and the workbenches 4. The control unit can be configured for controlling the transporting apparatus 2 to pick up the goods 100 from the goods shelves 1 and transport the goods 100 to the assembly line apparatus 3, or for controlling the transporting apparatus 2 to pick up the goods 100 on the assembly line apparatus 3 and transport the goods 100 to the goods shelves 1. The control unit can also be configured for controlling the workbenches 4 to sort the goods 100 conveyed on the assembly line apparatus 3, or for placing the goods 100 onto the assembly line apparatus 3.

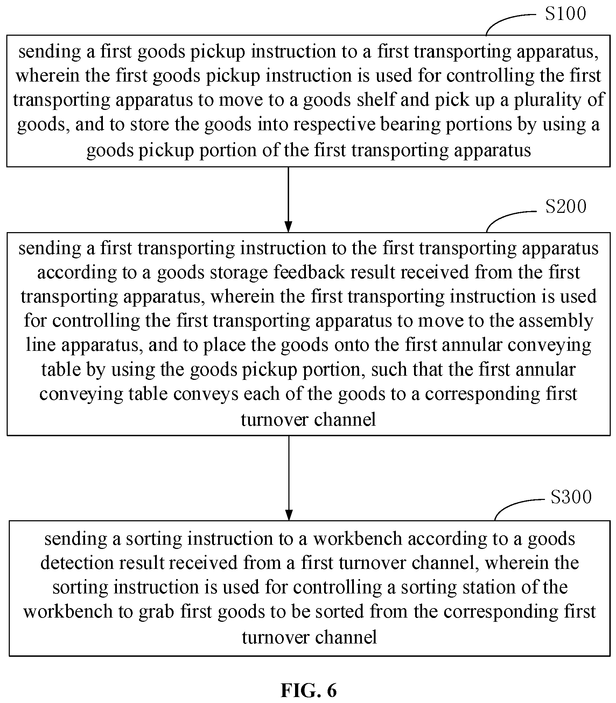

In the second aspect, an embodiment of the present invention provides a logistics control method applied to the logistics system of any of the above embodiments. As shown in FIG. 6, the logistics control method includes:
S100: sending a first goods pickup instruction to a first transporting apparatus, wherein the first goods pickup instruction is used for controlling the first transporting apparatus to move to a goods shelf and pick up a plurality of goods, and to store the goods into respective bearing portions by using a goods pickup portion of the first transporting apparatus.

The first goods pickup instruction may include goods shelf information and goods information. The goods shelf information is used for enabling the first transporting apparatus to determine a target goods shelf. The goods information is used for enabling the goods pickup portion of the first transporting apparatus to determine a specific position of the target goods on the target goods shelf. The first transporting apparatus can pick up a plurality of goods from one goods shelf or pick up a plurality of goods from a plurality of goods shelves respectively. Specifically, a goods shelf allocated to the first transporting apparatus depends on the first goods pickup instruction.

S200: sending a first transporting instruction to the first transporting apparatus according to a goods storage feedback result received from the first transporting apparatus, wherein the first transporting instruction is used for controlling the first transporting apparatus to move to the assembly line apparatus, and to place the goods onto the first annular conveying table by using the goods pickup portion, such that the first annular conveying table conveys each of the goods to a corresponding first turnover channel.

The goods storage feedback result can be sent by the first transporting apparatus. The goods storage feedback result may include feedback information indicating that the goods have been stored in the bearing portions, and may also include feedback information on the number of idle bearing portions currently had by the first transporting apparatus.

S300: sending a sorting instruction to a workbench according to a goods detection result received from a first turnover channel, wherein the sorting instruction is used for controlling a sorting station of the workbench to grab first goods to be sorted from the corresponding first turnover channel. In a case where the first turnover channel detects that there are goods thereon, conveyed by the first annular conveying table, the first turnover channel sends the goods detection result.

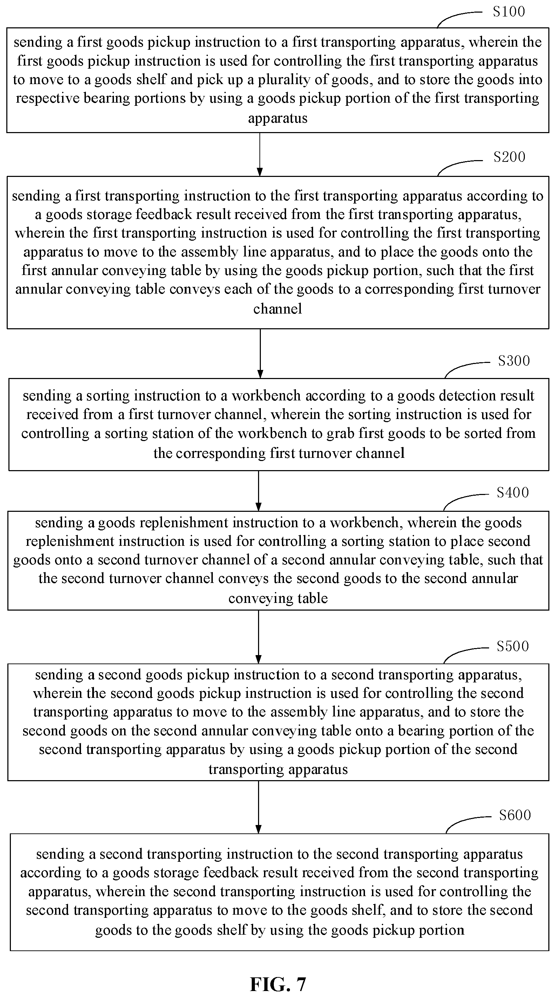

In an implementation, as shown in FIG. 7, the logistics control method further includes:
S400: sending a goods replenishment instruction to a workbench, wherein the goods replenishment instruction is used for controlling a sorting station to place second goods onto a second turnover channel of a second annular conveying table, such that the second turnover channel conveys the second goods to the second annular conveying table.

The second goods may be goods, which are not sorted by the workbench, on the first annular conveying table. The second goods may also be goods picked up by the workbench from the outside and needed to be replenished into the goods shelf.

S500: sending a second goods pickup instruction to a second transporting apparatus, wherein the second goods pickup instruction is used for controlling the second transporting apparatus to move to the assembly line apparatus, and to store the second goods on the second annular conveying table onto a bearing portion of the second transporting apparatus by using a goods pickup portion of the second transporting apparatus.

S600: sending a second transporting instruction to the second transporting apparatus according to a goods storage feedback result received from the second transporting apparatus, wherein the second transporting instruction is used for controlling the second transporting apparatus to move to the goods shelf, and to store the second goods to the goods shelf by using the goods pickup portion.

The goods storage feedback result can be sent by the second transporting apparatus. The goods storage feedback result may include feedback information indicating that the goods have been stored in the bearing portion, and may also include feedback information on the number of idle bearing portions currently had by the second transporting apparatus.

The second transporting instruction may include goods shelf information and goods information. The goods shelf information is used for enabling the second transporting apparatus to determine a target goods shelf. The goods information is used for enabling the goods pickup portion of the second transporting apparatus to determine a specific position of the target goods on the target goods shelf. The second transporting apparatus can store a plurality of goods onto one goods shelf or store a plurality of goods onto a plurality of goods shelves respectively. Specifically, a goods shelf allocated to the second transporting apparatus depends on the second transporting instruction.

In an example, the logistics control method includes the following.

The control unit determines a goods shelf at which a material box is located, a specific storage location on the goods shelf, and the inventory quantity according to an order for the material box.

The first goods pickup instruction is generated according to the determined goods shelf at which the material box is located, the determined specific storage location on the goods shelf and the determined inventory quantity.

According to the position of the goods shelf where the material box is located, a roadway corresponding to the goods shelf is determined, and a first transporting apparatus is selected from a plurality of transporting apparatuses. The strategy for selecting the first transporting apparatus can be determined according to the travel paths of the transporting apparatuses or can be determined according to the number of idle bearing portions of each of the transporting apparatuses.

A first goods pickup instruction is sent to the first transporting apparatus. The first transporting apparatus, according to the first goods pickup instruction, moves to the goods shelf and picks up a plurality of material boxes, and stores the material boxes into respective bearing portions by using the goods pickup portion.

The first transporting apparatus sends to the control unit a feedback result indicating completion of a goods pickup task or a feedback result indicating no idle bearing portion.

The control unit sends a first transporting instruction to the first transporting apparatus according to the material box storage feedback result of the first transporting apparatus. The first transporting apparatus moves to the assembly line apparatus according to the first transporting instruction, and places the material boxes onto the first annular conveying table by using the goods pickup portion, such that the first annular conveying table conveys each material box to a corresponding first turnover channel and conveys the material box to a corresponding workbench through the corresponding first turnover channel.

A sorting instruction is sent to the workbench. The workbench grabs a first material box to be sorted from the corresponding first turnover channel according to the order information in the sorting instruction, and sorts the goods in the first material box.

After the workbench completes the sorting task, the workbench sends the feedback result to the control unit, and the control unit sends a goods replenishment instruction to the workbench according to the feedback result.

The workbench, according to the goods replenishment instruction, controls the sorting station to place second goods on a second turnover channel of a second annular conveying table, such that the second turnover channel conveys the second goods to the second annular conveying table.

A second goods pickup instruction is sent to a second transporting apparatus, and the second transporting apparatus, according to the second goods pickup instruction, moves to the assembly line apparatus, and stores, by using the goods pickup portion of the second transporting apparatus, the second goods on the second annular conveying table onto a bearing portion of the second transporting apparatus.

The control unit sends a second transporting instruction to the second transporting apparatus according to the goods storage feedback result of the second transporting apparatus. The second transporting apparatus moves to the goods shelf according to the second transporting instruction, and stores the second goods to the goods shelf by using the goods pickup portion.

In an example, the logistics control method includes the following.

The control unit determines a material box to be replenished, the goods replenishment goods shelf, and the goods replenishment storage location on the goods shelf according to the goods replenishment order.

A second goods pickup instruction is generated according to the material box to be replenished, the goods replenishment goods shelf, and the goods replenishment storage location on the goods shelf.

According to the position of the goods shelf where the material box is located, a roadway corresponding to the goods shelf is determined, and a second transporting apparatus is selected from a plurality of transporting apparatuses.

A sorting station of a workbench is controlled to place the material box to be replenished onto the second annular conveying table.

A second goods pickup instruction is sent to the second transporting apparatus, and the second transporting apparatus, according to the second goods pickup instruction, moves to the assembly line apparatus, and stores, by using the goods pickup portion of the second transporting apparatus, the second goods on the second annular conveying table onto a bearing portion of the second transporting apparatus.

The control unit sends a second transporting instruction to the second transporting apparatus according to the goods storage feedback result of the second transporting apparatus. The second transporting apparatus moves to the goods shelf according to the second transporting instruction, and stores the second goods to the goods shelf by using the goods pickup portion.

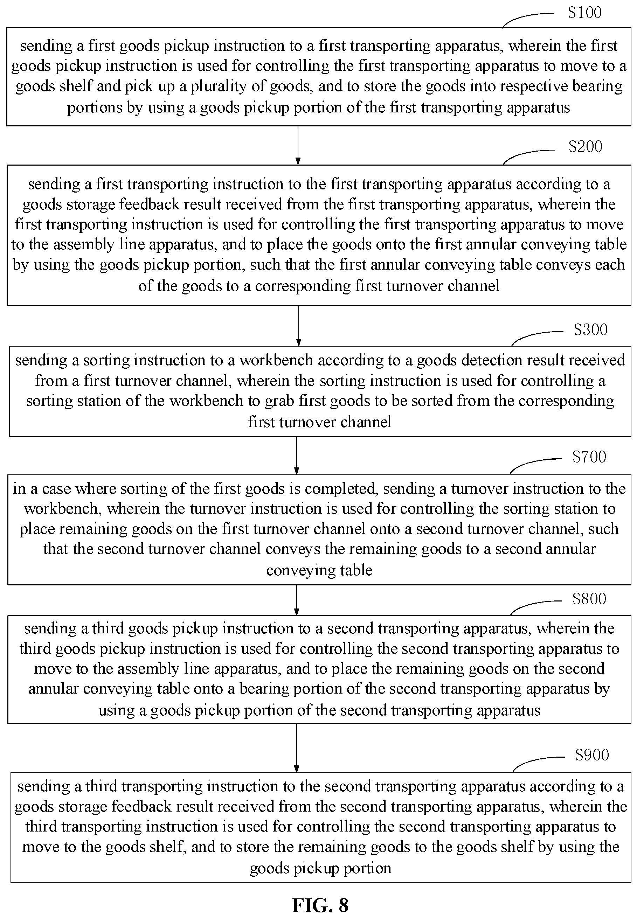

In an implementation, as shown in FIG. 8, the logistics control method further includes:
S700: in a case where sorting of the first goods is completed, sending a turnover instruction to the workbench, wherein the turnover instruction is used for controlling the sorting station to place remaining goods on the first turnover channel onto a second turnover channel, such that the second turnover channel conveys the remaining goods to a second annular conveying table.

S800: sending a third goods pickup instruction to a second transporting apparatus, wherein the third goods pickup instruction is used for controlling the second transporting apparatus to move to the assembly line apparatus, and to place the remaining goods on the second annular conveying table onto a bearing portion of the second transporting apparatus by using a goods pickup portion of the second transporting apparatus.

S900: sending a third transporting instruction to the second transporting apparatus according to a goods storage feedback result received from the second transporting apparatus, wherein the third transporting instruction is used for controlling the second transporting apparatus to move to the goods shelf, and to store the remaining goods to the goods shelf by using the goods pickup portion.

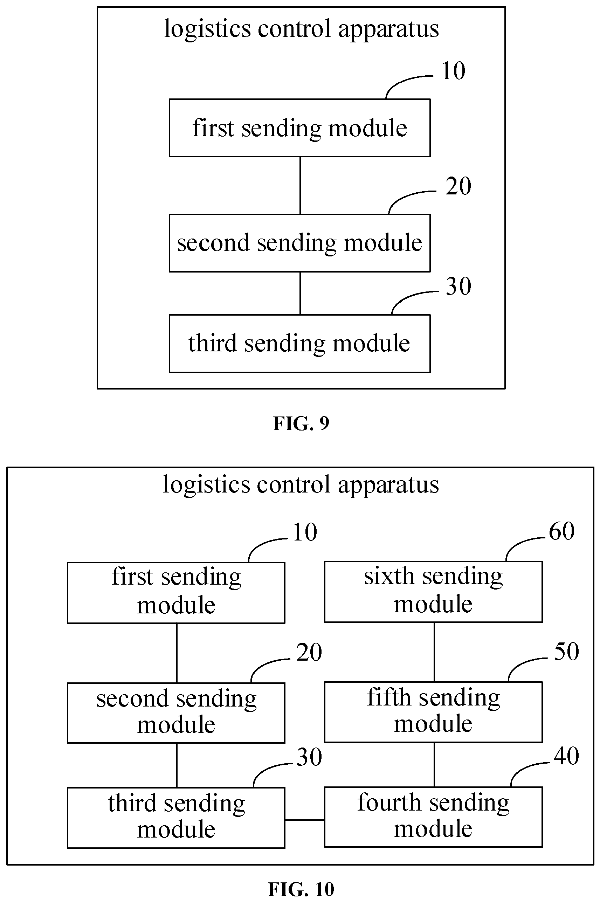

In a third aspect, an embodiment of the present invention provides a logistics control apparatus, as shown in FIG. 9, including:
a first sending module 10, configured for sending a first goods pickup instruction to a first transporting apparatus, wherein the first goods pickup instruction is used for controlling the first transporting apparatus to move to a goods shelf and pick up a plurality of goods, and to store the goods into respective bearing portions according to a goods pickup portion of the first transporting apparatus;
a second sending module 20, configured for, according to a goods storage feedback result received from the first transporting apparatus, sending a first transporting instruction to the first transporting apparatus, wherein the first transporting instruction is used for controlling the first transporting apparatus to move to an assembly line apparatus, and to place the goods onto a first annular conveying table by using the goods pickup portion, such that the first annular conveying table conveys each of the goods to a corresponding first turnover channel; and
a third sending module 30, configured for sending a sorting instruction to a workbench according to a goods detection result received from a first turnover channel, wherein the sorting instruction is used for controlling a sorting station of the workbench to grab first goods to be sorted from the corresponding first turnover channel.

In an implementation, as shown in FIG. 10, the logistics control apparatus further includes:
a fourth sending module 40, configured for sending a goods replenishment instruction to a workbench, wherein the goods replenishment instruction is used for controlling a sorting station to place second goods to be replenished to the goods shelf onto a second turnover channel, such that the second turnover channel conveys the second goods to a second annular conveying table;
a fifth sending module 50, configured for sending a second goods pickup instruction to a second transporting apparatus, wherein the second goods pickup instruction is used for controlling the second transporting apparatus to move to the assembly line apparatus, and to store the second goods on the second annular conveying table onto a bearing portion of the second transporting apparatus by using a goods pickup portion of the second transporting apparatus; and
a sixth sending module 60, configured for, according to a goods storage feedback result received from the second transporting apparatus, sending a second transporting instruction to the second transporting apparatus, wherein the second transporting instruction is used for controlling the second transporting apparatus to move to the goods shelf, and to store the second goods to the goods shelf by using the goods pickup portion.

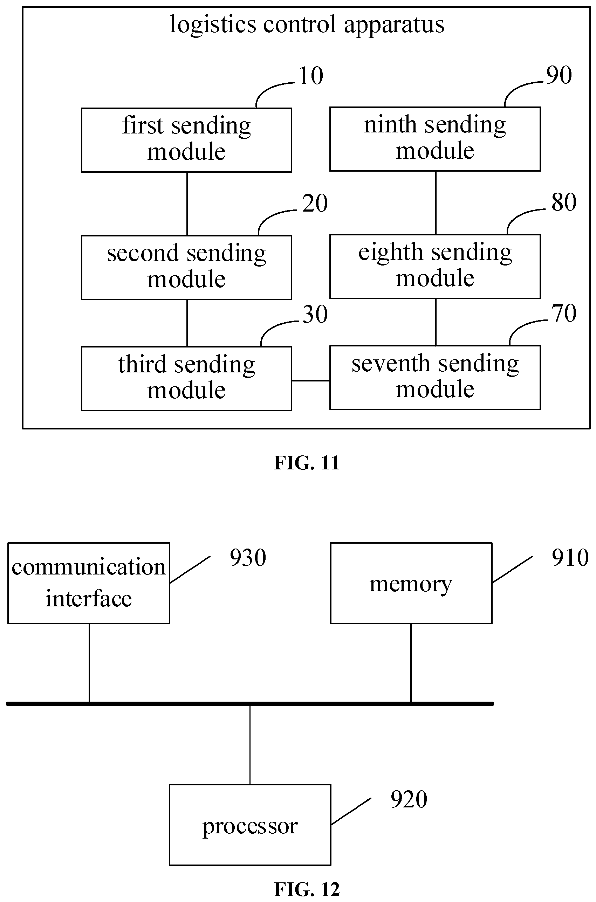

In an implementation, as shown in FIG. 11, the logistics control apparatus further includes:
a seventh sending module 70, configured for, in a case where sorting of the first goods is completed, sending a turnover instruction to the workbench, wherein the turnover instruction is used for controlling the sorting station to place remaining goods on the first turnover channel onto a second turnover channel, such that the second turnover channel conveys the remaining goods to a second annular conveying table;
an eighth sending module 80, configured for sending a third goods pickup instruction to a second transporting apparatus, wherein the third goods pickup instruction is used for controlling the second transporting apparatus to move to the assembly line apparatus, and to place the remaining goods on the second annular conveying table onto a bearing portion of the second transporting apparatus by using a goods pickup portion of the second transporting apparatus; and
a ninth sending module 90, configured for, according to a goods storage feedback result received from the second transporting apparatus, sending a third transporting instruction to the second transporting apparatus, wherein the third transporting instruction is used for controlling the second transporting apparatus to move to the goods shelf, and to store the remaining goods to the goods shelf by using the goods pickup portion.

The function of each module in each apparatus of the embodiments of the present invention can be referred to the corresponding description in the above method, which will not be repeated here.

FIG. 12 shows a structure block diagram of a logistics control terminal according to an embodiment of the present invention. As shown in FIG. 12, the terminal includes a memory 910 and a processor 920, and the memory 910 stores a computer program that can run on the processor 920. The processor 920, when executing the computer program, implements the logistic control method in the above embodiment. The number of memories 910 or the number of processors 920 may be one or more.

The terminal further includes:
a communication interface 930, configured for communicating with external devices for interactive data transmission.

The memory 910 may include a high-speed random access memory (RAM), or may include a non-volatile memory, for example at least one disk memory.

If the memory 910, the processor 920, and the communication interface 930 are implemented independently, the memory 910, the processor 920, and the communication interface 930 can be connected to each other and communicate with each other through a bus. The bus can be an industry standard architecture (ISA) bus, a peripheral component interconnect (PCI) bus, an extended industry standard architecture (EISA) bus, etc. The bus may include an address bus, a data bus, a control bus, or the like. For representation, only one thick line is shown in the FIG. 12, which does not mean that there is only one communication bus or one type of communication bus.

Optionally, in a specific implementation, if the memory 910, the processor 920, and the communication interface 930 are integrated on a chip, the memory 910, the processor 920, and the communication interface 930 can communicate with each other through an internal interface.

An embodiment of the present invention provides a computer-readable storage medium, storing a computer program. The program, when executed by a processor, implements the method described in any one of the above embodiments.

Additionally, the terms "first" and "second" are used for descriptive purposes only and are not to be construed as indicating or implying relative importance or implicitly indicating the number of indicated technical features. Thus, features defining "first" and "second" may explicitly or implicitly include at least one of the features. In the description of the present invention, "a plurality of" means two or more, unless expressly limited otherwise.

Any process or method description in the flowchart or otherwise described herein can be understood as a module, fragment or part of code representing executable instructions including one or more steps for implementing a specific logical function or process. Moreover, the scope of the preferred implementation of the present invention includes another implementation, in which the functions may not be performed in the order shown or discussed including in a basically simultaneous manner or in a reverse order according to the functions involved, which should be understood by those skilled in the technical field to which the embodiment of the present invention belongs.

The logic and/or steps represented in the flowchart or otherwise described herein, for example, which may be considered as an ordered list of executable instructions for implementing logical functions, may be embodied in any computer readable medium, for use by, or in conjunction with, instruction execution systems, apparatuses, or devices (for example, a computer-based system, a system including a processor, or other system that may extract instructions from an instruction execution system, apparatus or device and execute the instructions). In terms of this description, a "computer-readable medium" may be any apparatus that may include, store, communicate, propagate, or transmit a program for use by or in conjunction with the instruction execution systems, apparatuses, or devices. More specific examples (non-exhaustive list) of computer readable medium include: an electrical connection (an electronic device) having one or more wires, a portable computer disk cartridge (a magnetic device), a random access memory (RAM), a read only memory (ROM), an erasable editable read only memory (EPROM or a flash memory), a fiber optic apparatus, and a portable compact disk read only memory (CDROM). In addition, the computer readable medium may even be papers or other suitable mediums on which the program may be printed. The program is obtained electronically, for example, by optical scanning of papers or other mediums, followed editing, interpreting or, if necessary, processing in other suitable manner, and then is stored it in a computer memory.

It should be understood that each of portions of the present invention may be implemented in hardware, software, firmware, or a combination thereof. In the above-described implement manner, multiple steps or methods may be implemented in software or firmware stored in a memory and executed by a suitable instruction execution system. For example, if they are implemented in hardware, as in another embodiment, they may be implemented by any one of the following techniques well known in the art or combination thereof: a discrete logic circuit having logic gate circuits for implementing logic functions on data signals, an application specific integrated circuit having suitable combinational logic gate circuits, a programmable gate array (PGA), a field programmable gate array (FPGA), etc.

It could be understood by those skilled in the art that the implementation of all or some of the steps of the method of the embodiment described above may be accomplished by a program instructing related hardware, and the program may be stored in a computer-readable storage medium. When the program is executed, one or a combination of the steps of the method embodiment is implemented.

In addition, respective functional units in each embodiment of the present invention can be integrated into one processing module, respective units can exist separately physically, or two or more units can be integrated into one module. The above integrated module can be implemented in the form of hardware or in the form of a software function module. When the integrated module is implemented in the form of a software function module and sold or used as an independent product, the integrated module can also be stored in a computer-readable storage medium. The storage medium may be a read only memory, a magnetic disk, an optical disk, or the like.

## Claims

1. A logistics system, comprising:
a plurality of goods shelves (1), wherein the goods shelves (1) are arranged at an interval, and a roadway (11) is formed between two adjacent goods shelves (1);
a transporting apparatus (2), comprising a vehicle body (21);
**characterized in that** the transporting apparatus (2) further comprises a bracket (22), wherein the bracket (22) is arranged on an upper portion of the vehicle body (21), a plurality of bearing portions (23) are arranged on a first side (221) of the bracket (22), a liftable goods pickup portion (24) is arranged on a second side (222) of the bracket (22), and the transporting apparatus (2) is configured for transporting goods (100) from the goods shelves (1) to an assembly line apparatus (3);
wherein the logistics system further comprises:
the assembly line apparatus (3), comprising a first annular conveying table (31), wherein the first annular conveying table (31) has a plurality of first turnover channels (32); and
a plurality of workbenches (4), connected to the first turnover channels (32) respectively, wherein sorting stations (41) are arranged on the workbenches (4), and the sorting stations (41) are configured for sorting goods (100) on corresponding first turnover channels (32).

2. The logistics system of claim 1, wherein the bearing portions (23) are stacked successively along a height direction of the bracket (22), and an open end of an accommodation cavity of each of the bearing portions (23) is arranged towards the second side (222).

3. The logistics system of claim 2, wherein the goods pickup portion (24) comprises a support plate (231), which is slidably connected to the accommodation cavity of each of the bearing portions (23).

4. The logistics system of any one of claims 1 to 3, wherein the first annular conveying table (31) further has a plurality of first feeding channels (34) and a plurality of first discharging channels (35).

5. The logistics system of any one of claims 1 to 4, wherein the assembly line apparatus (3) further comprises a second annular conveying table (36) located above the first annular conveying table (31), the second annular conveying table (36) has a plurality of second turnover channels (37), and the second turnover channels (37) are connected to the workbenches (4) respectively.

6. The logistics system of claim 5, wherein the second annular conveying table (36) further has a plurality of second feeding channels (38) and a plurality of second discharging channels (39).

7. The logistics system of any one of claims 1 to 6, wherein the first annular conveying table (31) has at least two first turnover channels (32) with different diameters.

8. A logistics control method, applied to the logistics system of any one of claims 1 to 7 and comprising:
sending (S100) a first goods pickup instruction to a first transporting apparatus, wherein the first goods pickup instruction is used for controlling the first transporting apparatus to move to a goods shelf and pick up a plurality of goods, and to store the goods into respective bearing portions by a goods pickup portion of the first transporting apparatus;
sending (S200) a first transporting instruction to the first transporting apparatus according to a goods storage feedback result received from the first transporting apparatus, wherein the first transporting instruction is used for controlling the first transporting apparatus to move to the assembly line apparatus, and to place the goods onto the first annular conveying table by using the goods pickup portion, such that the first annular conveying table conveys each of the goods to a corresponding first turnover channel; and
sending (S300) a sorting instruction to a workbench according to a goods detection result received from a first turnover channel, wherein the sorting instruction is used for controlling a sorting station of the workbench to grab first goods to be sorted from the corresponding first turnover channel.

9. The logistics control method of claim 8, further comprising:
sending (S400) a goods replenishment instruction to a workbench, wherein the goods replenishment instruction is used for controlling a sorting station to place second goods to be replenished to the goods shelf onto a second turnover channel, such that the second turnover channel conveys the second goods to a second annular conveying table;
sending (S500) a second goods pickup instruction to a second transporting apparatus, wherein the second goods pickup instruction is used for controlling the second transporting apparatus to move to the assembly line apparatus, and to store the second goods on the second annular conveying table onto a bearing portion of the second transporting apparatus by using a goods pickup portion of the second transporting apparatus; and
sending (S600) a second transporting instruction to the second transporting apparatus according to a goods storage feedback result received from the second transporting apparatus, wherein the second transporting instruction is used for controlling the second transporting apparatus to move to the goods shelf, and to store the second goods to the goods shelf by using the goods pickup portion.

10. The logistics control method of claim 8 or 9, further comprising:
in a case where sorting of the first goods is completed, sending (S700) a turnover instruction to the workbench, wherein the turnover instruction is used for controlling the sorting station to place remaining goods on the first turnover channel onto a second turnover channel, such that the second turnover channel conveys the remaining goods to a second annular conveying table;
sending (S800) a third goods pickup instruction to a second transporting apparatus, wherein the third goods pickup instruction is used for controlling the second transporting apparatus to move to the assembly line apparatus, and to place the remaining goods on the second annular conveying table onto a bearing portion of the second transporting apparatus by using a goods pickup portion of the second transporting apparatus; and
sending (S900) a third transporting instruction to the second transporting apparatus according to a goods storage feedback result received from the second transporting apparatus, wherein the third transporting instruction is used for controlling the second transporting apparatus to move to the goods shelf, and to store the remaining goods to the goods shelf by using the goods pickup portion.

11. A logistics control apparatus, applied to the logistics system of any one of claims 1 to 7, comprising:
a first sending module (10), configured for sending a first goods pickup instruction to a first transporting apparatus, wherein the first goods pickup instruction is used for controlling the first transporting apparatus to move to a goods shelf and pick up a plurality of goods, and to store the goods into respective bearing portions by a goods pickup portion of the first transporting apparatus;
a second sending module (20), configured for, according to a goods storage feedback result received from the first transporting apparatus, sending a first transporting instruction to the first transporting apparatus, wherein the first transporting instruction is used for controlling the first transporting apparatus to move to an assembly line apparatus, and to place the goods onto a first annular conveying table by using the goods pickup portion, such that the first annular conveying table conveys each of the goods to a corresponding first turnover channel; and
a third sending module (30), configured for sending a sorting instruction to a workbench according to a goods detection result received from a first turnover channel, wherein the sorting instruction is used for controlling a sorting station of the workbench to grab first goods to be sorted from the corresponding first turnover channel.

12. The logistics control apparatus of claim 11, further comprising:
a fourth sending module (40), configured for sending a goods replenishment instruction to a workbench, wherein the goods replenishment instruction is used for controlling a sorting station to place second goods to be replenished to the goods shelf onto a second turnover channel, such that the second turnover channel conveys the second goods to a second annular conveying table;
a fifth sending module (50), configured for sending a second goods pickup instruction to a second transporting apparatus, wherein the second goods pickup instruction is used for controlling the second transporting apparatus to move to the assembly line apparatus, and to store the second goods on the second annular conveying table onto a bearing portion of the second transporting apparatus by using a goods pickup portion of the second transporting apparatus; and
a sixth sending module (60), configured for, according to a goods storage feedback result received from the second transporting apparatus, sending a second transporting instruction to the second transporting apparatus, wherein the second transporting instruction is used for controlling the second transporting apparatus to move to the goods shelf, and to store the second goods to the goods shelf by using the goods pickup portion.

13. The logistics control apparatus of claim 11 or 12, further comprising:
a seventh sending module (70), configured for, in a case where sorting of the first goods is completed, sending a turnover instruction to the workbench, wherein the turnover instruction is used for controlling the sorting station to place remaining goods on the first turnover channel onto a second turnover channel, such that the second turnover channel conveys the remaining goods to a second annular conveying table;
an eighth sending module (80), configured for sending a third goods pickup instruction to a second transporting apparatus, wherein the third goods pickup instruction is used for controlling the second transporting apparatus to move to the assembly line apparatus, and to place the remaining goods on the second annular conveying table onto a bearing portion of the second transporting apparatus by using a goods pickup portion of the second transporting apparatus; and
a ninth sending module (90), configured for, according to a goods storage feedback result received from the second transporting apparatus, sending a third transporting instruction to the second transporting apparatus, wherein the third transporting instruction is used for controlling the second transporting apparatus to move to the goods shelf, and to store the remaining goods to the goods shelf by using the goods pickup portion.

14. A logistics control terminal, applied to the logistics system of any one of claims 1 to 7, comprising:
one or more processors; and
a storage apparatus, configured for storing one or more programs;
wherein the one or more programs, when executed by the one or more processors, cause the one or more processors to implement the method of any one of claims 8 to 10.

15. A computer-readable storage medium, storing a computer program, wherein the program, when executed by a processor, implements the method of any one of claims 8 to 10.

## Patentansprüche

1. Logistiksystem, aufweisend:
mehrere Warenregale (1), wobei die Warenregale (1) in einem Abstand angeordnet sind, und wobei eine Fahrbahn (11) zwischen zwei benachbarten Warenregalen (1) gebildet ist;
eine Transportvorrichtung (2), welche einen Fahrzeugkörper (21) aufweist;
**dadurch gekennzeichnet, dass** die Transportvorrichtung (2) ferner eine Halterungsvorrichtung (22) aufweist, wobei die Halterungsvorrichtung (22) an einem oberen Abschnitt des Fahrzeugkörpers (21) angeordnet ist, wobei mehrere Lagerabschnitte (23) an einer ersten Seite (221) der Halterungsvorrichtung (22) angeordnet sind, wobei ein anhebbarer Warenaufnahmeabschnitt (24) an einer zweiten Seite (222) der Halterungsvorrichtung (22) angeordnet ist, und wobei die Transportvorrichtung (2) zum Transportieren von Waren (100) von den Warenregalen (1) aus hin zu einer Fließbandvorrichtung (3) konfiguriert ist;
wobei das Logistiksystem ferner aufweist:
die Fließbandvorrichtung (3), welche einen ersten Ringförmige-Beförderung-Tisch (31) aufweist, wobei der erste Ringförmige-Beförderung-Tisch (31) mehrere erste Umschlagskanäle (32) hat; und
mehrere Werkbänke (4), welche in jeweils zugeordneter Weise mit den ersten Umschlagkanälen (32) verbunden sind, wobei Sortierstationen (41) an den Werkbänken (4) angeordnet sind, und wobei die Sortierstationen (41) zum Sortieren von Waren (100) an korrespondierenden ersten Umschlagkanälen (32) konfiguriert sind.

2. Logistiksystem gemäß Anspruch 1, wobei die Lagerabschnitte (23) entlang von einer Höhenrichtung der Halterungsvorrichtung (22) aufeinanderfolgend gestapelt sind, und wobei ein offenes Ende eines Beherbergungshohlraums von jedem von den Lagerabschnitten (23) in Richtung hin zu der zweiten Seite (222) angeordnet ist.

3. Logistiksystem gemäß Anspruch 2, wobei der
Warenaufnahmeabschnitt (24) eine Lagerplatte (231) aufweist, welche verschiebbar mit dem Beherbergungshohlraum von jedem von den Lagerabschnitten (23) verbunden ist.

4. Logistiksystem gemäß einem der Ansprüche 1 bis 3, wobei der erste Ringförmige-Beförderung-Tisch (31) ferner mehrere erste Zuführkanäle (34) und mehrere erste Abführkanäle (35) hat.

5. Logistiksystem gemäß einem der Ansprüche 1 bis 4, wobei die Fließbandvorrichtung (3) ferner einen zweiten Ringförmige-Beförderung-Tisch (36) aufweist, welcher sich oberhalb von dem ersten Ringförmige-Beförderung-Tisch (31) befindet, wobei der zweite Ringförmige-Beförderung-Tisch (36) mehrere zweite Umschlagskanäle (37) aufweist, und wobei die zweiten Umschlagskanäle (37) in jeweils zugeordneter Weise mit den Werkbänken (4) verbunden sind.

6. Logistiksystem gemäß Anspruch 5, wobei der zweite Ringförmige-Beförderung-Tisch (36) ferner mehrere zweite Zuführkanäle (38) und mehrere zweite Abführkanäle (39) hat.

7. Logistiksystem gemäß einem der Ansprüche 1 bis 6, wobei der erste Ringförmige-Beförderung-Tisch (31) mindestens zwei erste Umschlagkanäle (32) mit unterschiedlichen Durchmessern hat.

8. Logistiksteuerungsverfahren, welches bei dem Logistiksystem gemäß einem der Ansprüche 1 bis 7 angewendet wird und aufweist:
Senden (S100) einer ersten Warenabholungsanweisung an eine erste Transportvorrichtung, wobei die erste Warenabholungsanweisung zum Steuern der ersten Transportvorrichtung verwendet wird, um sich hin zu einem Warenregal zu bewegen und mehrere Waren aufzunehmen, sowie um die Waren in jeweils zugeordnete Lagerabschnitte mittels eines Warenaufnahmeabschnitts der ersten Transportvorrichtung hinein zu verstauen;
Senden (S200) einer ersten Transportanweisung an die erste Transportvorrichtung gemäß einem Waren-Verstauung-Rückmeldung-Ergebnis, welches von der ersten Transportvorrichtung aus empfangen wird, wobei die erste Transportanweisung zum Steuern der ersten Transportvorrichtung verwendet wird, um sich hin zu der Fließbandvorrichtung zu bewegen, und um die Waren auf dem ersten Ringförmige-Beförderung-Tisch unter Verwendung des Warenaufnahmeabschnitts derart zu platzieren, dass der erste Ringförmige-Beförderung-Tisch jede von den Waren hin zu einem korrespondierenden ersten Umschlagskanal befördert; und
Senden (S300) einer Sortieranweisung an eine Werkbank gemäß einem Warendetektionsergebnis, welches von einem ersten Umschlagskanal aus empfangen wird, wobei die Sortieranweisung zum Steuern einer Sortierstation der Werkbank verwendet wird, um erste Waren, welche sortiert werden sollen, aus dem korrespondierenden ersten Umschlagskanal zu greifen.

9. Logistiksteuerungsverfahren gemäß Anspruch 8, welches ferner aufweist:
Senden (S400) einer Warenaufstockungsanweisung an eine Werkbank, wobei die Warenaufstockungsanweisung zum Steuern einer Sortierstation verwendet wird, um zweite Waren, welche in das Warenregal nachgefüllt werden sollen, auf einem zweiten Umschlagskanal derart zu platzieren, dass der zweite Umschlagskanal die zweiten Waren hin zu einem zweiten Ringförmige-Beförderung-Tisch befördert;
Senden (S500) einer zweiten Warenabholungsanweisung an eine zweite Transportvorrichtung, wobei die zweite Warenabholungsanweisung zum Steuern der zweiten Transportvorrichtung verwendet wird, um sich hin zu der Fließbandvorrichtung zu bewegen, und um die zweiten Waren an dem zweiten Ringförmige-Beförderung-Tisch auf einem Lagerabschnitt der zweiten Transportvorrichtung unter Verwendung eines Warenaufnahmeabschnitts der zweiten Transportvorrichtung zu verstauen; und
Senden (S600) einer zweiten Transportanweisung an die zweite Transportvorrichtung gemäß einem Waren-Verstauung-Rückmeldung-Ergebnis, welches von der zweiten Transportvorrichtung aus empfangen wird, wobei die zweite Transportanweisung zum Steuern der zweiten Transportvorrichtung verwendet wird, um sich hin zu dem Warenregal zu bewegen, und um die zweiten Waren in dem Warenregal unter Verwendung des Warenaufnahmeabschnitts zu verstauen.

10. Logistiksteuerungsverfahren gemäß Anspruch 8 oder 9, welches ferner aufweist:
in einem Fall, in welchem das Sortieren der ersten Waren abgeschlossen ist, Senden (S700) einer Umschlagsanweisung an die Werkbank, wobei die Umschlagsanweisung zum Steuern der Sortierstation verwendet wird, um übriggebliebene Waren an dem ersten Umschlagskanal auf einem zweiten Umschlagskanal derart zu platzieren, dass der zweite Umschlagskanal die übriggebliebenen Waren hin zu einem zweiten Ringförmige-Beförderung-Tisch befördert;
Senden (S800) einer dritten Warenabholungsanweisung an eine zweite Transportvorrichtung, wobei die dritte Warenabholungsanweisung zum Steuern der zweiten Transportvorrichtung verwendet wird, um sich hin zu der Fließbandvorrichtung zu bewegen, und um die übriggebliebenen Waren an dem zweiten Ringförmige-Beförderung-Tisch auf einem Lagerabschnitt der zweiten Transportvorrichtung unter Verwendung eines Warenaufnahmeabschnitts der zweiten Transportvorrichtung zu platzieren; und
Senden (S900) einer dritten Transportanweisung an die zweite Transportvorrichtung gemäß einem Waren-Verstauung-Rückmeldung-Ergebnis, welches von der zweiten Transportvorrichtung aus empfangen wird, wobei die dritte Transportanweisung zum Steuern der zweiten Transportvorrichtung verwendet wird, um sich hin zu dem Warenregal zu bewegen, und um die übriggebliebenen Waren in dem Warenregal unter Verwendung des Warenaufnahmeabschnitts zu verstauen.

11. Logistiksteuerungsvorrichtung, welche bei dem Logistiksystem gemäß einem der Ansprüche 1 bis 7 angewendet wird und welche aufweist:
ein erstes Sendemodul (10), welches zum Senden einer ersten Warenabholungsanweisung an eine erste Transportvorrichtung konfiguriert ist, wobei die erste Warenabholungsanweisung zum Steuern der ersten Transportvorrichtung verwendet wird, um sich hin zu einem Warenregal zu bewegen und mehrere Waren aufzunehmen, sowie um die Waren in jeweils zugeordnete Lagerabschnitte hinein mittels eines Warenaufnahmeabschnitts der ersten Transportvorrichtung zu verstauen;
ein zweites Sendemodul (20), welches, gemäß einem Waren-Verstauung-Rückmeldung-Ergebnis, welches von der ersten Transportvorrichtung aus empfangen wird, zum Senden einer ersten Transportanweisung an die erste Transportvorrichtung konfiguriert ist, wobei die erste Transportanweisung zum Steuern der ersten Transportvorrichtung verwendet wird, um sich hin zu einer Fließbandvorrichtung zu bewegen, und um die Waren unter Verwendung des Warenaufnahmeabschnitts auf einem ersten Ringförmige-Beförderung-Tisch zu platzieren derart, dass der erste Ringförmige-Beförderung-Tisch jede von den Waren hin zu einem korrespondierenden ersten Umschlagskanal befördert; und
ein drittes Sendemodul (30), welches zum Senden einer Sortieranweisung an eine Werkbank gemäß einem Warendetektionsergebnis, welches von einem ersten Umschlagskanal aus empfangen wird, konfiguriert ist, wobei die Sortieranweisung zum Steuern einer Sortierstation der Werkbank verwendet wird, um erste Waren, welche sortiert werden sollen, aus dem korrespondierenden ersten Umschlagskanal zu greifen.

12. Logistiksteuerungsvorrichtung gemäß Anspruch 11, ferner aufweisend:
ein viertes Sendemodul (40), welches zum Senden einer Warenaufstockungsanweisung an eine Werkbank konfiguriert ist, wobei die Warenaufstockungsanweisung zum Steuern einer Sortierstation verwendet wird, um zweite Waren, welche in das Warenregal nachgefüllt werden sollen, auf einem zweiten Umschlagskanal derart zu platzieren, dass der zweite Umschlagskanal die zweiten Waren hin zu einem zweiten Ringförmige-Beförderung-Tisch befördert;
ein fünftes Sendemodul (50), welches zum Senden einer zweiten Warenabholungsanweisung an eine zweite Transportvorrichtung konfiguriert ist, wobei die zweite Warenabholungsanweisung zum Steuern der zweiten Transportvorrichtung verwendet wird, um sich hin zu der Fließbandvorrichtung zu bewegen, und um die zweiten Waren an dem zweiten Ringförmige-Beförderung-Tisch auf einem Lagerabschnitt der zweiten Transportvorrichtung zu platzieren unter Verwendung eines Warenaufnahmeabschnitts der zweiten Transportvorrichtung; und
ein sechstes Sendemodul (60), welches zum Senden, gemäß einem Waren-Verstauung-Rückmeldung-Ergebnis, welches von der zweiten Transportvorrichtung aus empfangen wird, einer zweiten Transportanweisung an die zweite Transportvorrichtung konfiguriert ist, wobei die zweite Transportanweisung zum Steuern der zweiten Transportvorrichtung verwendet wird, um sich hin zu dem Warenregal zu bewegen, und um die zweiten Waren in dem Warenregal unter Verwendung des Warenaufnahmeabschnitts zu verstauen.

13. Logistiksteuerungsvorrichtung gemäß Anspruch 11 oder 12, ferner aufweisend:
ein siebtes Sendemodul (70), welches, in einem Fall, in welchem das Sortieren der ersten Waren abgeschlossen ist, zum Senden einer Umschlagsanweisung an die Werkbank konfiguriert ist, wobei die Umschlagsanweisung zum Steuern der Sortierstation verwendet wird, um übriggebliebene Waren an dem ersten Umschlagskanal auf einem zweiten Umschlagskanal zu platzieren derart, dass der zweite Umschlagskanal die übriggebliebenen Waren hin zu einem zweiten Ringförmige-Beförderung-Tisch befördert;
ein achtes Sendemodul (80), welches zum Senden einer dritten Warenabholungsanweisung an eine zweite Transportvorrichtung konfiguriert ist, wobei die dritte Warenabholungsanweisung zum Steuern der zweiten Transportvorrichtung verwendet wird, um sich hin zu der Fließbandvorrichtung zu bewegen, und um die übriggebliebenen Waren an dem zweiten Ringförmige-Beförderung-Tisch auf einem Lagerabschnitt der zweiten Transportvorrichtung zu platzieren unter Verwendung eines Warenaufnahmeabschnitts der zweiten Transportvorrichtung; und
ein neuntes Sendemodul (90), welches, gemäß einem Waren-Verstauung-Rückmeldung-Ergebnis, welches von der zweiten Transportvorrichtung aus empfangen wird, zum Senden einer dritten Transportanweisung an die zweite Transportvorrichtung konfiguriert ist, wobei die dritte Transportanweisung verwendet wird zum Steuern der zweiten Transportvorrichtung, um sich hin zu dem Warenregal zu bewegen, und um die übriggebliebenen Waren in das Warenregal hinein zu verstauen unter Verwendung des Warenaufnahmeabschnitts.

14. Logistiksteuerungsterminal, welches bei dem Logistiksystem gemäß einem der Ansprüche 1 bis 7 angewendet wird und welches aufweist:
einen oder mehrere Prozessoren; und
einen Speicher, welcher zum Speichern eines oder mehrerer Programme konfiguriert ist;
wobei das eine oder die mehreren Programme, wenn sie mittels des einen oder der mehreren Prozessoren ausgeführt werden, den einen oder die mehreren Prozessoren dazu veranlassen, das Verfahren gemäß einem der Ansprüche 8 bis 10 durchzuführen.

15. Computerlesbares Speichermedium, welches ein Computerprogramm speichert, wobei das Programm, wenn es mittels eines Prozessors ausgeführt wird, das Verfahren gemäß einem der Ansprüche 8 bis 10 durchführt.

## Revendications

1. Système logistique, comprenant :
une pluralité d'étagères à marchandises (1), dans lequel les étagères à marchandises (1) sont disposées à un intervalle, et une voie de circulation (11) est formée entre deux étagères à marchandises adjacentes (1) ;
un dispositif de transport (2), comprenant un corps de véhicule (21) ;
**caractérisé en ce que** l'appareil de transport (2) comprend en outre un support (22), dans lequel le support (22) est agencé sur une partie supérieure du corps de véhicule (21), une pluralité de parties porteuses (23) sont agencées sur un premier côté (221) du support (22), une partie de prélèvement de marchandises relevable (24) est disposée sur un deuxième côté (222) du support (22), et l'appareil de transport (2) est configuré pour transporter des marchandises (100) depuis les étagères à marchandises (1) vers un appareil de chaîne de montage (3) ;
dans lequel le système logistique comprend en outre :
l'appareil de chaîne de montage (3), comprenant une première table de transport annulaire (31), dans lequel la première table de transport annulaire (31) comporte une pluralité de premiers canaux de transfert (32) ; et
une pluralité d'établis (4), reliés respectivement aux premiers canaux de transfert (32), dans lequel des stations de tri (41) sont agencées sur les établis (4), et les stations de tri (41) sont configurées pour trier des marchandises (100) sur des premiers canaux de transfert correspondants (32).

2. Système logistique selon la revendication 1, dans lequel les parties porteuses (23) sont empilées successivement le long d'une direction en hauteur du support (22), et une extrémité ouverte d'une cavité de logement de chacune des parties porteuses (23) est disposée vers le deuxième côté (222).

3. Système logistique selon la revendication 2, dans lequel la partie de prélèvement de marchandises (24) comprend une plaque de support (231) qui est reliée de manière coulissante à la cavité de logement de chacune des parties porteuses (23).

4. Système logistique selon l'une quelconque des revendications 1 à 3, dans lequel la première table de transport annulaire (31) comporte en outre une pluralité de premiers canaux d'alimentation (34) et une pluralité de premiers canaux de déchargement (35).

5. Système logistique selon l'une quelconque des revendications 1 à 4, dans lequel l'appareil de chaîne de montage (3) comprend en outre une deuxième table de transport annulaire (36) située au-dessus de la première table de transport annulaire (31), la deuxième table de transport annulaire (36) comporte une pluralité de deuxièmes canaux de transfert (37), et les deuxièmes canaux de transfert (37) sont reliés respectivement aux établis (4).

6. Système logistique selon la revendication 5, dans lequel la deuxième table de transport annulaire (36) comporte en outre une pluralité de deuxièmes canaux d'alimentation (38) et une pluralité de deuxièmes canaux de déchargement (39).

7. Système logistique selon l'une quelconque des revendications 1 à **6,** dans lequel la première table de transport annulaire (31) comporte au moins deux premiers canaux de transfert (32) ayant des diamètres différents.

8. Procédé de commande logistique, appliqué au système logistique selon l'une quelconque des revendications 1 à 7 et comprenant :
l'envoi (S100) d'une première instruction de prélèvement de marchandises à un premier appareil de transport, dans lequel la première instruction de prélèvement de marchandises est utilisée pour commander le premier appareil de transport afin de se déplacer vers une étagère à marchandises et prélever une pluralité de marchandises, et pour stocker les marchandises dans des parties porteuses respectives par une partie de prélèvement de marchandises du premier appareil de transport ;
l'envoi (S200) d'une première instruction de transport au premier appareil de transport en fonction d'un résultat de rétroaction de stockage de marchandises reçu du premier appareil de transport, dans lequel la première instruction de transport est utilisée pour commander le premier appareil de transport afin de se déplacer vers l'appareil de chaîne de montage et placer les marchandises sur la première table de transport annulaire en utilisant la partie de prélèvement de marchandises, de telle sorte que la première table de transport annulaire transporte chacune des marchandises vers un premier canal de retour correspondant ; et
l'envoi (S300) d'une instruction de tri à un établi en fonction d'un résultat de détection de marchandises reçu d'un premier canal de transfert, dans lequel l'instruction de tri est utilisée pour commander une station de tri de l'établi pour saisir des premières marchandises à trier à partir du premier canal de transfert correspondant.

9. Procédé de commande logistique selon la revendication 8, comprenant en outre :
l'envoi (S400) d'une instruction de réapprovisionnement en marchandises à un établi, dans lequel l'instruction de réapprovisionnement en marchandises est utilisée pour commander une station de tri afin de placer des deuxièmes marchandises à réapprovisionner sur l'étagère à marchandises sur un deuxième canal de transfert, de telle sorte que le deuxième canal de transfert transporte les deuxièmes marchandises vers une deuxième table de transport annulaire ;
l'envoi (S500) d'une deuxième instruction de prélèvement de marchandises à un deuxième appareil de transport, dans lequel la deuxième instruction de prélèvement de marchandises est utilisée pour commander le deuxième appareil de transport afin de se déplacer vers l'appareil de chaîne de montage et stocker les deuxièmes marchandises sur la deuxième table de transport annulaire sur une partie porteuse du deuxième appareil de transport en utilisant une partie de prélèvement de marchandises du deuxième appareil de transport ; et
l'envoi (S600) d'une deuxième instruction de transport au deuxième appareil de transport en fonction d'un résultat de rétroaction de stockage de marchandises reçu du deuxième appareil de transport, dans lequel la deuxième instruction de transport est utilisée pour commander le deuxième appareil de transport afin de se déplacer vers l'étagère à marchandises et stocker les deuxièmes marchandises sur l'étagère à marchandises en utilisant la partie de prélèvement de marchandises.

10. Procédé de commande logistique selon la revendication 8 ou 9, comprenant en outre :
dans un cas où le tri des premières marchandises est terminé, l'envoi (S700) d'une instruction de transfert à l'établi, dans lequel l'instruction de transfert est utilisée pour commander la station de tri afin de placer des marchandises restantes sur le premier canal de transfert sur un deuxième canal de transfert, de telle sorte que le deuxième canal de transfert transporte les marchandises restantes vers une deuxième table de transport annulaire ;
l'envoi (S800) d'une troisième instruction de prélèvement de marchandises à un deuxième appareil de transport, dans lequel la troisième instruction de prélèvement de marchandises est utilisée pour commander le deuxième appareil de transport afin de se déplacer vers l'appareil de chaîne de montage et placer les marchandises restantes sur la deuxième table de transport annulaire sur une partie porteuse du deuxième appareil de transport en utilisant une partie de prélèvement de marchandises du deuxième appareil de transport ; et
l'envoi (S900) d'une troisième instruction de transport au deuxième appareil de transport en fonction d'un résultat de rétroaction de stockage de marchandises reçu du deuxième appareil de transport, dans lequel la troisième instruction de transport est utilisée pour commander le deuxième appareil de transport afin de se déplacer vers l'étagère à marchandises et stocker les marchandises restantes sur l'étagère à marchandises en utilisant la partie de prélèvement de marchandises.

11. Appareil de commande logistique, appliqué au système logistique selon l'une quelconque des revendications 1 à 7, comprenant :
un premier module d'envoi (10), configuré pour envoyer une première instruction de prélèvement de marchandises à un premier appareil de transport, dans lequel la première instruction de prélèvement de marchandises est utilisée pour commander le premier appareil de transport afin de se déplacer vers une étagère à marchandises et prélever une pluralité de marchandises, et stocker les marchandises dans des parties porteuses respectives par une partie de prélèvement de marchandises du premier appareil de transport ;
un deuxième module d'envoi (20), configuré pour, en fonction d'un résultat de rétroaction de stockage de marchandises reçu du premier appareil de transport, envoyer une première instruction de transport au premier appareil de transport, dans lequel la première instruction de transport est utilisée pour commander le premier appareil de transport afin de se déplacer vers un appareil de chaîne de montage et placer les marchandises sur une première table de transport annulaire en utilisant la partie de prélèvement de marchandises, de telle sorte que la première table de transport annulaire transporte chacune des marchandises vers un premier canal de transfert correspondant ; et
un troisième module d'envoi (30), configuré pour envoyer une instruction de tri à un établi en fonction d'un résultat de détection de marchandises reçu d'un premier canal de transfert, dans lequel l'instruction de tri est utilisée pour commander une station de tri de l'établi afin de saisir des premières marchandises à trier à partir du premier canal de transfert correspondant.

12. Appareil de commande logistique selon la revendication 11, comprenant en outre :
un quatrième module d'envoi (40), configuré pour envoyer une instruction de réapprovisionnement en marchandises à un établi, dans lequel l'instruction de réapprovisionnement en marchandises est utilisée pour commander une station de tri afin de placer des deuxièmes marchandises à réapprovisionner sur l'étagère à marchandises sur un deuxième canal de transfert, de telle sorte que le deuxième canal de transfert transporte les deuxièmes marchandises vers une deuxième table de transport annulaire ;
un cinquième module d'envoi (50), configuré pour envoyer une deuxième instruction de prélèvement de marchandises à un deuxième appareil de transport, dans lequel la deuxième instruction de prélèvement de marchandises est utilisée pour commander le deuxième appareil de transport afin de se déplacer vers l'appareil de chaîne de montage et stocker les deuxièmes marchandises sur la deuxième table de transport annulaire sur une partie porteuse du deuxième appareil de transport en utilisant une partie de prélèvement de marchandises du deuxième appareil de transport ; et
un sixième module d'envoi (60), configuré pour, en fonction d'un résultat de rétroaction de stockage de marchandises reçu du deuxième appareil de transport, envoyer une deuxième instruction de transport au deuxième appareil de transport, dans lequel la deuxième instruction de transport est utilisée pour commander le deuxième appareil de transport afin de se déplacer vers l'étagère à marchandises et stocker les deuxièmes marchandises sur l'étagère à marchandises en utilisant la partie de prélèvement de marchandises.

13. Appareil de commande logistique selon la revendication 11 ou 12, comprenant en outre :
un septième module d'envoi (70), configuré pour, dans un cas où le tri des premiers produits est terminé, envoyer une instruction de transfert à l'établi, dans lequel l'instruction de transfert est utilisée pour commander la station de tri afin de placer des marchandises restantes sur le premier canal de transfert sur un deuxième canal de transfert, de telle sorte que le deuxième canal de transfert transporte les marchandises restantes vers une deuxième table de transport annulaire ;
un huitième module d'envoi (80), configuré pour envoyer une troisième instruction de prélèvement de marchandises à un deuxième appareil de transport, dans lequel la troisième instruction de prélèvement de marchandises est utilisée pour commander le deuxième appareil de transport afin de se déplacer vers l'appareil de chaîne de montage et placer les marchandises restantes sur la deuxième table de transport annulaire sur une partie porteuse du deuxième appareil de transport en utilisant une partie de prélèvement de marchandises du deuxième appareil de transport ; et
un neuvième module d'envoi (90), configuré pour, en fonction d'un résultat de rétroaction de stockage de marchandises reçu du deuxième appareil de transport, envoyer une troisième instruction de transport au deuxième appareil de transport, dans lequel la troisième instruction de transport est utilisée pour commander le deuxième appareil de transport afin de se déplacer vers l'étagère à marchandises et stocker les marchandises restantes sur l'étagère à marchandises en utilisant la partie de prélèvement de marchandises.

14. Terminal de commande logistique, appliqué au système logistique selon l'une quelconque des revendications 1 à 7, comprenant :
un ou plusieurs processeurs ; et
un appareil de stockage, configuré pour stocker un ou plusieurs programmes ;
dans lequel ledit un ou lesdits plusieurs programmes, lorsqu'ils sont exécutés par ledit un ou lesdits plusieurs processeurs, amènent ledit un ou lesdits plusieurs processeurs à mettre en œuvre le procédé selon l'une quelconque des revendications 8 à 10.

15. Support de stockage lisible par ordinateur, stockant un programme informatique, dans lequel le programme, lorsqu'il est exécuté par un processeur, met en œuvre le procédé selon l'une quelconque des revendications 8 à 10.
